# FASCICULE DE BREVET EUROPEEN

(11) **EP 2 636 269 B1**
(45) Date de publication et mention de la délivrance du brevet: **16.09.2015**
(21) Numéro de dépôt: 11832140.5
(22) Date de dépôt: 28.10.2011
(51) Int. Cl.: H04W 74/08, H04W 74/00, H04W 48/08, H04W 28/12, H04W 48/16, H04W 84/12

(54) **PROCEDE ET DISPOSITIF DE REGULATION D'EMISSION DANS UN RESEAU DE TELECOMMUNICATION**
VERFAHREN UND VORRICHTUNG ZUR STEUERUNG EINES RUNDFUNKS IN EINEM TELEKOMMUNIKATIONSNETZ
METHOD AND DEVICE FOR CONTROLLING A BROADCAST IN A TELECOMMUNICATION NETWORK

(30) Priorité: 04.11.2010 FR 1059096
(43) Date de publication de la demande: 11.09.2013
(73) Titulaire: Orange, 75015 Paris (FR)
(72) Inventeur: BROWN, Patrick, F-06800 Cagnes Sur Mer (FR); GALTIER, Jérôme, F-06000 Nice (FR)
(74) Mandataire: Fontenelle, Sandrine
(86) Numéro de dépôt international: PCT/FR2011/052536
(87) Numéro de publication internationale: WO 2012/059674

(56) Documents cités:
- WO-A1-2009/095628
- US-A1- 2007 140 115

## Description

### Arrière plan de l'invention

La présente invention concerne le domaine des réseaux de télécommunication sans fil, en particulier des réseaux locaux sans fil ou WLAN (de l'anglais « Wireless Local Access Network ») conformes à la famille de normes IEEE 802.11.

De tels réseaux sont également nommés réseaux WI-FI. Ils sont utilisés pour mettre en réseau, dans de nombreuses applications, des stations (par exemple des ordinateurs, des assistants personnels et des périphériques).

La norme 802.11 définit dans le document « IEEE 802.11 a-1999, IEEE 802.11 b-1999, IEEE 802.11 d-2001, Part 11 : wireless LAN medium access control (MAC) and physical layer (PHY) specifications » un procédé de régulation du trafic dans le réseau sans fil. Ce procédé utilise un système de fenêtre de congestion (Congestion Window « CW ») pour réguler ce trafic. Selon cette norme, pour déterminer l'instant auquel émettre une trame de données, une station tire un nombre aléatoire au hasard entre 0 et CW-1, la valeur CW étant un entier compris entre deux valeurs CWₘᵢₙ et CWₘₐₓ spécifiées par la norme 802.11.

Le nombre tiré sert de compteur à rebours pour l'émission de la trame, ce compteur étant différé si la station constate qu'une autre station est en train d'émettre. Malheureusement, ce système à fenêtre de congestion génère un nombre important de collisions sur le réseau sans fil, ce qui se traduit, du point de vue de l'utilisateur, par une perte importante de bande passante.

Un mécanisme connu sous le nom « méthode des tournois » est susceptible d'être utilisé par les différentes stations pour réguler les émissions de trames et limiter le taux de collision. Cette méthode des tournois est décrite dans le document des auteurs Z. Abichar et M. Chang, intitulé « CONTI : Constant Time Contention Resolution for WLAN Access », IFIP Networking 2005.

La méthode des tournois consiste à organiser une sorte de tournoi entre les stations ayant au moins une trame à émettre. Un tournoi est composé d'un certain nombre de tours de sélection exécuté chacun pendant un intervalle de temps de durée prédéfinie permettant à chaque station d'avoir le temps d'entendre l'émission de toute autre. Cette durée peut typiquement être égale à la durée de l'intervalle de temps nommé « SlotTime » qui selon le standard IEEE 802.11, est définie comme intervalle élémentaire dans la procédure de résolution de contention par fenêtre de congestion. Au début du tournoi, toutes les stations ayant à émettre une trame sont susceptibles d'être autorisées à émettre cette trame. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement la trame de données émise. Ces stations devront alors participer au tournoi suivant pour tenter d'émettre à nouveau ces trames.

Le protocole Hiperlan est un des premiers protocoles intégrant la fonctionnalité de tournois.

Pour plus de renseignements, l'homme de métier peut se référer au document des auteurs Philippe Jacquet, Pascale Minet, Paul Mühlethaler et Nicolas Rivierre « Priority and Collision Detection with Active Signaling - The Channel Access Mechanism of HIPERLAN », Wireless Personnal Communications 4 : 11-26, 1996.

Les documents FR 2 893 206 et WO 2009/095628 expliquent respectivement comment améliorer considérablement l'efficacité des tournois en faisant dépendre les probabilités de tirage de l'historique du tournoi et comment garantir aux stations des temps d'accès bornés pour le transfert de flux synchrones dans des réseaux sans fil avec une bonne qualité de service.

Dans les tournois de l'art antérieur, la probabilité d'une issue négative, c'est-à-dire d'une émission avec collision lorsqu'au moins deux stations considèrent qu'elles ont gagné le tournoi, diminue asymptotiquement en 1 / 2^{kmax}, où kmax est le nombre de tours de sélection. Pour garantir de bonnes performances, le nombre de tours, et donc la durée du tournoi, doit être supérieur à un certain seuil. Ainsi, la Demanderesse a constaté que les réseaux qui mettent en oeuvre une méthode des tournois peuvent souffrir d'un mauvais taux d'utilisation de la bande passante, la durée d'exécution du protocole de résolution de contention pouvant représenter, par exemple dans l'exemple d'un tournoi à 6 tours, de l'ordre de 25% du temps nécessaire à l'émission d'une trame de données sur un réseau IEEE 802.11n.

De plus, dans un réseau dans lequel certaines stations mettent en oeuvre une méthode des tournois et d'autres stations mettent en oeuvre une procédure à fenêtre de congestion telle que précitée, des collisions peuvent causer l'échec d'un tournoi.

Le document US 2007/0140115 décrit une méthode de sélection d'un canal de transmission disponible pour la transmission de messages entre un terminal mobile et une station de base.

### Objet et résumé de l'invention

La présente invention vise un procédé de régulation d'émission mettant en oeuvre une méthode à tournoi qui ne présente pas les inconvénients des procédés connus de l'art antérieur.

Plus particulièrement, l'invention concerne un procédé de régulation d'émission pouvant être mis en oeuvre par une station ayant au moins une trame de données à émettre via un réseau de télécommunication, le procédé comportant, lors d'au moins un tour de sélection parmi un ensemble de tours de sélection:
- une étape d'obtention d'une valeur représentative soit d'une autorisation d'émettre soit d'une interdiction d'émettre ladite trame ;
- lorsque ladite valeur est représentative d'une autorisation d'émettre, une étape d'émission d'un signal d'information dans un premier canal de communication dudit réseau, pour indiquer aux autres stations que ladite station a obtenu une valeur représentative d'une autorisation d'émettre ; ou,
- lorsque ladite valeur est représentative d'une interdiction d'émettre, une étape d'écoute d'un éventuel signal d'information émis dans le premier canal de communication dudit réseau ;
- une étape d'écoute ou d'émission dans un deuxième canal de communication dudit réseau, différent du premier canal de communication, cette étape d'écoute ou d'émission dans le deuxième canal de communication étant exécutée simultanément à l'étape d'émission dans le premier canal de communication ou à l'étape d'écoute dans le premier canal de communication.

Corrélativement, l'invention vise un dispositif de régulation d'émission destiné à une station ayant au moins une trame de données à émettre via un réseau de télécommunication sans fil, le dispositif comportant :
- des moyens d'obtention, lors d'au moins un tour de sélection parmi un ensemble de tours de sélection, d'une valeur représentative soit d'une autorisation d'émettre soit d'une interdiction d'émettre ladite trame ;
- des moyens d'émission d'un signal d'information dans un premier canal de communication dudit réseau, pour indiquer aux autres stations que ladite station a obtenu une valeur représentative d'une autorisation d'émettre, activés lorsque ladite valeur est représentative d'une autorisation d'émettre ;
- des moyens d'écoute d'un éventuel signal d'information émis dans le premier canal de communication dudit réseau, activés lorsque ladite valeur est représentative d'une interdiction d'émettre ;
- des moyens d'écoute ou d'émission dans un deuxième canal de communication dudit réseau, différent du premier canal de communication, ces moyens d'écoute ou d'émission dans le deuxième canal de communication étant activés simultanément aux moyens d'émission dans le premier canal de communication ou aux moyens d'écoute dans le premier canal de communication.

Ainsi, pendant le déroulement du tournoi, une station peut émettre plusieurs signaux simultanément, recevoir plusieurs signaux simultanément, ou émettre un signal et recevoir un autre signal simultanément, ce qui permet d'améliorer l'efficacité du tournoi de différentes manières.

En effet, selon un premier mode de réalisation du procédé de régulation, l'étape d'écoute ou d'émission dans le deuxième canal de communication comprend, simultanément à l'émission ou à l'écoute du signal d'information dans le premier canal de communication, l'émission d'un signal d'occupation dans le deuxième canal.

Corrélativement, dans un premier mode de réalisation du dispositif de régulation, les moyens d'écoute ou d'émission dans le deuxième canal de communication sont configurés pour émettre un signal d'occupation dans le deuxième canal simultanément à l'émission ou à l'écoute du signal d'information dans le premier canal de communication.

Le tournoi mis en oeuvre permet de sélectionner efficacement une station autorisée à émettre une trame de donnée. Par ailleurs, pendant le déroulement du tournoi, le signal d'occupation permet d'informer d'éventuelles stations ne participant pas au tournoi que le tournoi est en cours. Il peut s'agir par exemple de stations utilisant un mécanisme d'accès à fenêtre de congestion. Ces stations étant informées du déroulement du tournoi, elles diffèrent leur compteur à rebours et n'émettent pas de trame pendant le déroulement du tournoi, ce qui permet d'éviter des collisions. Ainsi, l'efficacité du tournoi est améliorée et la coexistence des stations utilisant un mécanisme à tournoi et de stations utilisant un autre mécanisme est facilitée.

L'émission du signal d'occupation dans le deuxième canal peut être précédée d'un test visant à déterminer si la station appartient à un sous-ensemble de stations qui doivent émettre le signal d'occupation.

Cela permet d'éviter l'émission du signal d'occupation par un nombre trop élevé de stations, ce qui pourrait causer par exemple des interférences avec d'autres communications sans fils.

Selon un deuxième mode de réalisation du procédé de régulation, l'étape d'écoute ou d'émission dans le deuxième canal de communication comprend, simultanément à l'émission ou à l'écoute du signal d'information dans le premier canal de communication, l'écoute dans le deuxième canal d'une éventuelle trame de données émise par une station ne participant pas au tournoi, et lorsqu'une trame est détectée dans le deuxième canal, une étape de détermination que la station qui participe au tournoi n'est pas autorisée à émettre de trame de données.

Corrélativement, selon un deuxième mode de réalisation du dispositif de régulation, les moyens d'écoute ou d'émission dans le deuxième canal de communication sont aptes à écouter dans le deuxième canal une éventuelle trame de données émise par une station ne participant pas au tournoi, simultanément à l'émission ou à l'écoute du signal d'information dans le premier canal de communication, le dispositif de régulation comprenant des moyens de détermination que la station qui participe au tournoi n'est pas autorisée à émettre de trame de données, activés lorsqu'une trame est détectée dans le deuxième canal.

Le deuxième mode de réalisation permet donc d'utiliser le premier canal pour la mise en oeuvre du tournoi, et d'écouter simultanément le deuxième canal dans lequel des stations ne participant pas au tournoi sont susceptibles d'émettre des trames. Si une trame émise par une station ne participant pas au tournoi est détectée, le tournoi est interrompu sans qu'aucune station participant au tournoi n'ait émise de trame de données. Cela permet d'éviter de bloquer le deuxième canal pendant le déroulement du tournoi, d'autres stations ayant la possibilité d'émettre des trames. De plus, on évite une collision entre la trame émise par la station ne participant pas au tournoi et la trame qui aurait été émise par la station gagnante du tournoi.

Ainsi, dans ce mode de réalisation également, l'efficacité du tournoi est améliorée et la coexistence de stations utilisant un mécanisme à tournoi et de stations utilisant un autre mécanisme est facilitée.

Selon un troisième mode de réalisation du procédé de régulation, une pluralité de valeurs sont représentatives d'une autorisation d'émettre, le premier canal de communication étant choisi dans un ensemble de canaux de communication en fonction de la valeur représentative d'une autorisation d'émettre obtenue, le deuxième canal de communication étant composé d'au moins une fréquence ne faisant partie du canal choisi, l'étape d'écoute ou d'émission dans le deuxième canal de communication comprenant, simultanément à l'émission du signal d'information dans le premier canal de communication, l'écoute d'un signal d'information dans au moins le deuxième canal de communication.

Corrélativement, selon un troisième mode de réalisation du dispositif de régulation, une pluralité de valeurs sont représentatives d'une autorisation d'émettre, le premier canal de communication étant choisi dans un ensemble de canaux de communication en fonction de la valeur représentative d'une autorisation d'émettre obtenue, le deuxième canal de communication étant composé d'au moins une fréquence ne faisant partie du canal choisi, les moyens d'écoute ou d'émission dans le deuxième canal de communication étant aptes à écouter un signal d'information dans au moins le deuxième canal de communication simultanément à l'émission du signal d'information dans le premier canal de communication.

Dans ce cas, le tournoi permet de sélectionner efficacement une station autorisée à émettre une trame de donnée, avec un nombre de tours kmax réduit. En effet, si m représente le nombre de valeurs représentatives d'une autorisation d'émettre, à chaque tour, il est possible de différencier entre m + 1 classes de station au lieu de 2 dans les tournois de l'art antérieur. La probabilité d'une issue négative au tournoi, c'est-à-dire d'une émission avec collision lorsqu'au moins deux stations considèrent qu'elles ont gagné le tournoi, diminue en 1 / (m + 1)^{kmax}. Le nombre de tours kmax, et donc la durée du tournoi, peut donc être réduit tout en conservant une probabilité d'issue négative déterminée.

Dans ce troisième mode de réalisation, selon une variante, un niveau de priorité est affecté à chacun des canaux dudit ensemble de canaux et chacune des valeurs représentatives d'une autorisation d'émettre est représentative d'un dit niveau de priorité,
le premier canal de communication étant le canal auquel est affecté le niveau de priorité représenté par la valeur obtenue,
le deuxième canal de communication étant composé d'au moins une fréquence, faisant partie d'un canal dudit ensemble auquel est affecté un niveau de priorité plus élevé que le niveau de priorité représenté par la valeur obtenue, mais qui ne fait pas partie d'un canal dudit ensemble auquel est affecté un niveau de priorité égal ou inférieur au niveau de priorité représenté par la valeur obtenue.

Le premier canal de communication et le deuxième canal de communication peuvent correspondre à deux ensembles d'au moins une fréquence différents.

Dans ce cas, l'invention peut notamment être facilement mise en oeuvre dans un réseau sans fil de type WLAN.

Dans un mode de réalisation, les différentes étapes du procédé de régulation selon l'invention sont déterminées par des instructions de programme d'ordinateur.

En conséquence, l'invention vise aussi un programme d'ordinateur sur un support d'information, ce programme étant susceptible d'être mis en oeuvre dans une station ou plus généralement dans un ordinateur, ce programme comportant des instructions adaptées à la mise en oeuvre des étapes d'un procédé de résolution tel que décrit ci-dessus.

Ce programme peut utiliser n'importe quel langage de programmation et être sous la forme de code source, code objet ou de code intermédiaire entre code source et code objet, tel que dans une forme partiellement compilée ou dans n'importe quelle autre forme souhaitable.

L'invention vise aussi un support d'information lisible par un ordinateur et comportant des instructions d'un programme d'ordinateur tel que mentionné ci-dessus.

Le support d'information peut être n'importe quelle entité ou dispositif capable de stocker le programme.

Par exemple, le support d'information peut comporter un moyen de stockage tel qu'une ROM, par exemple un CD ROM ou une ROM de circuit microélectronique ou encore un moyen d'enregistrement magnétique, par exemple une disquette (floppy disk) ou un disque dur.

D'autre part, le support d'information peut être un support transmissible tel qu'un signal électrique ou optique, qui peut être acheminé via un câble électrique ou optique, par radio ou par d'autres moyens.

Le programme selon l'invention peut être en particulier téléchargé sur un réseau de type Internet.

Alternativement le support d'information peut être un circuit intégré dans lequel le programme est incorporé, le circuit étant adapté ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel qu'à un composant matériel. Un composant logiciel correspond à un ou plusieurs programmes d'ordinateur, un ou plusieurs sous-programmes d'un programme ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en avant une fonction ou un ensemble de fonctions.

### Brève description des dessins

D'autres buts, caractéristiques et avantages de l'invention, apparaitront à travers la description qui va suivre, donnée uniquement à titre d'exemple non limitative et faite par référence aux dessins annexés dans lesquels :
- la figure 1 représente un réseau de télécommunication sans fil, avec des stations conformes à l'invention dans un mode particulier de réalisation ;
- la figure 2 représente un dispositif de régulation d'émission conforme à l'invention dans un mode particulier de réalisation ;
- les figures 3 à 5 représentent, sous forme d'organigramme, les principales étapes d'un procédé de régulation d'émission, respectivement selon un premier, un deuxième et un troisième mode de réalisation de l'invention ; et
- la figure 6 représente des canaux pouvant être utilisés dans le mode de réalisation de la figure 5.

### Description détaillée de modes de réalisation de l'invention

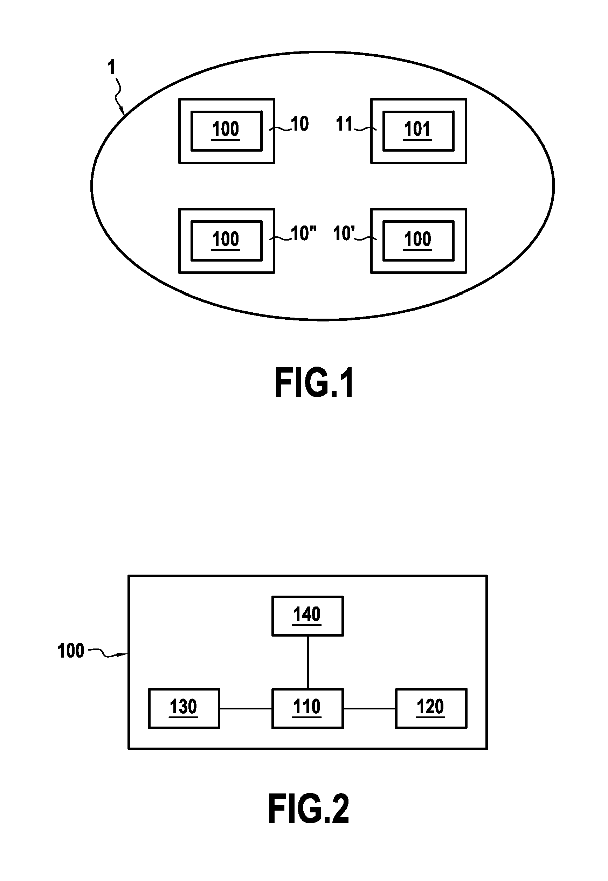

La **Figure 1** représente un réseau 1 de télécommunication sans fil dans lequel évoluent des stations 10, 10', 10" conformes à l'invention. Des stations 11 conformes à un mode de réalisation connu de l'art antérieur, dont l'une est représentée sur la figure 1, peuvent également évoluer dans le réseau 1.

Chacune des stations 10 comportent un dispositif de régulation d'émission 100 conforme à l'invention. Dans le mode représenté à la F**igure 2**, le dispositif de régulation 100 selon l'invention comporte un processeur 110, une mémoire vive 120, une mémoire morte de type ROM 130 et un module 140 d'accès au réseau 1. Ces différents éléments sont reliés entre eux par un système de bus non référencé.

Le module 140 permet d'émettre et de recevoir des trames et des signaux dans le réseau 1. Le module 140 est apte à recevoir ou émettre simultanément dans différents canaux de communication.

Dans l'exemple décrit ici, le module 140 est constitué par une carte d'accès au réseau 1 conforme à la famille de norme IEEE 802.11. Dans ce cas, les différents canaux de communication utilisés par le module 140 peuvent correspondre à différentes bandes de fréquence. Par exemple, dans le cas d'un réseau IEEE 802.11n, il existe, en effet, dans la bande de fréquences 2,4 GHZ des sous-bandes de 2 MHZ non utilisées entre les canaux non superposés d'émission de trame. De la même façon, dans le cas des réseaux IEEE 802.11a et IEEE 802.11n, les sous-bandes de fréquence [5,15 - 5,17] GHZ et [5,33 - 5,35] GHZ, de 20 MHZ chacune, ne sont pas utilisées.

Dans une variante, le module 140 permet d'émettre dans des sous-bandes de fréquences différentes à l'intérieur d'une même bande de fréquence.

Chaque station 10, 10' et 10" met en oeuvre un procédé de régulation d'émission de trame dans le réseau 1, qui fait usage de la méthode des tournois citée en introduction. Ce procédé de régulation peut être mis en oeuvre par l'exécution d'un programme d'ordinateur stocké dans la mémoire morte 130.

De manière similaire, chaque station 11 comprend un dispositif de régulation d'émission 101 qui met en oeuvre un procédé de régulation d'émission de trame dans le réseau 1. Toutefois, dans le cas d'une station 11, le procédé de régulation d'émission de trame fait appel à la procédure à fenêtre de congestion citée en introduction.

Dans la méthode des tournois, telle que décrite par CONTI dans le document référencé ci-dessus, les autorisations ou interdictions d'émettre sont attribuées aux stations en utilisant des variables aléatoires binaires ayant une loi de distribution de Bernouilli. Cette loi de distribution est définie par une probabilité de tirage d'une autorisation d'émettre. Une telle probabilité est ainsi affectée à chaque station et à chaque tour de sélection. Les probabilités sont choisies de préférence de manière à ce que statistiquement le taux de collision soit le plus faible possible.

Une procédure pour choisir les probabilités de façon optimale est présentée dans le document « Analysis et optimization of mac with constant size congestion windows for WLAN » par J. Galtier, Proceedings on the Third International Conference on Services and Networks communications, INRIA, Library of Congress Number 2007930108, August 2007. Selon un mode de réalisation particulier décrit dans le document de brevet WO2007/051946, les probabilités affectées aux différentes stations lors d'un tour de sélection peuvent être fonction des autorisations ou interdictions d'émettre tirées aux tours de sélection précédents de manière à minimiser le taux de collision.

Selon un autre mode de réalisation décrit dans le document de brevet WO2009/095628, notamment dans la section relative à la mise en oeuvre d'une méthode d'ordonnancement de type "Round Robin" ou ses variantes (page 20 et suivantes du document précité), la valeur représentative d'une autorisation ou interdiction d'émettre affectée à un station pour un tour de sélection donné est obtenue par calcul: elle est déduite d'une valeur d'index, affectée à la station pour le tournoi courant et calculée à partir d'une valeur d'index affectée à la station pour un tournoi antérieur.

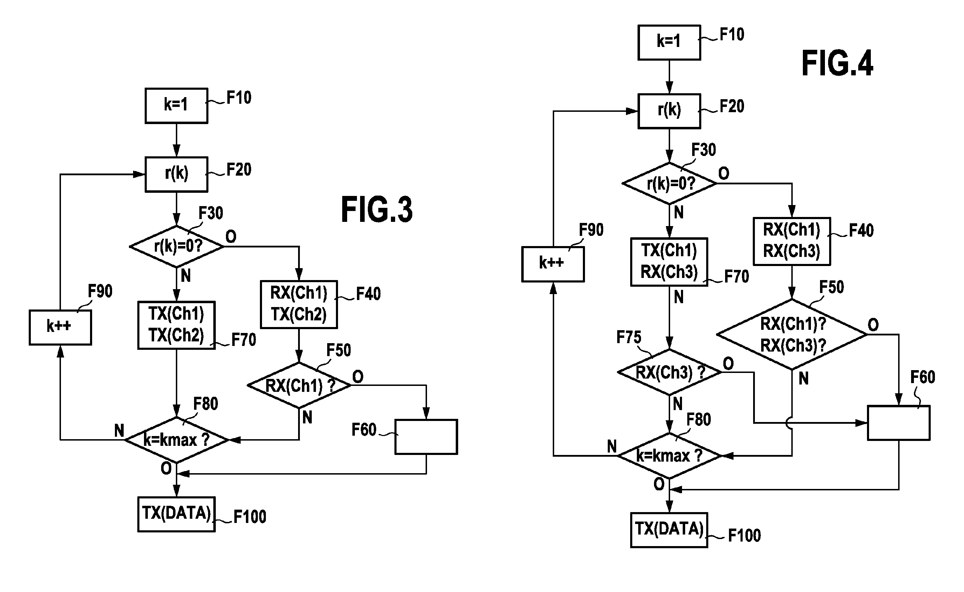

La **Figure 3** est un organigramme qui représente les principales étapes d'un procédé de régulation d'émission selon un premier mode de réalisation de l'invention.

Ce procédé est mis en oeuvre par le dispositif de régulation d'émission 100 d'une station 10, 10', 10" ayant au moins une trame de données à émettre à travers le réseau 1. Toutes les stations 10, 10', 10" ayant une trame de données à émettre, mettent en oeuvre simultanément ce même procédé, sans qu'une concertation ou interrogation mutuelle, autre que ce qui est décrit dans les étapes décrites ci-dessous, soit nécessaire entre ces stations. Le procédé décrit par référence à la figure 3 correspond à ce qu'on appelle un tournoi.

Pour la description de ce premier mode de réalisation (figure 3), ainsi que celle des deux autres modes de réalisation (figures 4 à 5), on distingue différents canaux de communication qui sont utilisés pendant un tournoi:
- Ch1 est un premier canal de communication utilisé par les stations 10, 10', 10" pour la mise en oeuvre du tournoi et le départage entre stations participant à ce tournoi;
- Ch2 est un deuxième sous-canal de communication utilisé par des stations 10, 10', 10" pour émettre un signal d'occupation de canal : il permet de contrôler l'occupation d'un canal d'émission de trames de données selon ce qui sera décrit plus en détail ci-dessous par référence à la figure 3;
- Ch3 est un troisième sous-canal de communication utilisé par les stations 10, 10', 10" pour détecter, par écoute de ce canal Ch3, l'émission par les stations 11 d'une trame de données dans ce canal Ch3; l'utilisation de ce canal est décrite plus en détail ci-dessous par référence à la figure 4.

Les canaux Ch1, Ch2 et Ch3 sont par exemple des sous-canaux du canal d'émission de trame utilisé par les stations 11, selon ce qui est prévu dans la norme 802.11. Le canal Ch1 peut cependant être séparé du canal d'émission de trame des stations 11.

Afin de permettre l'échange de trames de données entre stations ne participant pas au tournoi et de stations participant au tournoi, le canal d'émission des stations 10, 10', 10", c'est-à-dire le canal utilisé par une station 10, 10', 10" pour l'émission des trames de données, doit être identique au canal d'émission des stations 11. En particulier, si l'on souhaite garantir la compatibilité avec des stations mettant en oeuvre la norme Wifi 802.11, le canal d'émission devra être choisi identique à celui prévu dans cette norme.

De manière générale, il suffit cependant que le canal d'émission des stations 11 comprenne au moins le canal Ch2 pour éviter des collisions entre stations ne participant pas au tournoi et de stations participant au tournoi, et le canal Ch3 afin que les stations 10, 10', 10" détectent l'émission des trames de données par les stations 11.

Dans le cas de canaux radio, l'émission sur une fréquence par une station 10 ne permet pas de détecter une émission par une station tierce 10' ou 11 sur la même fréquence. Dans le choix des fréquences composant un canal, on doit tenir compte du fait que pour qu'une station puisse émettre sur un canal A et détecter une émission sur un canal B, il faut que le canal B comporte des fréquences non couvertes par le canal A. Ainsi les canaux Ch2 et Ch3 peuvent comprendre des fréquences communes. Par exemple, le canal Ch2 peut être un sous-canal du canal Ch3.

Dans le contexte de ce document, un canal de communication est composé d'un ensemble d'au moins une fréquence. Un canal de communication n'est donc pas nécessairement formé d'une bande ou plage contigüe de fréquences. Ainsi, le fait que deux canaux de communication soient séparés se traduit par le fait que les ensembles de fréquence qui composent ces canaux sont disjoints et ne comportent donc aucune fréquence commune.

Dans la suite de la description du premier mode de réalisation, les notations suivantes seront utilisées :
- k est l'indice identifiant le tour de sélection au cours d'un tournoi ;
- kₘₐₓ est le nombre maximal de tours de sélection pour un tournoi ;
- r est une variable binaire ;
- r(k) est la valeur de la variable binaire r obtenue pour le tour de sélection d'indice k ; r(k) appartient à l'ensemble {0, 1}, la valeur « 1 » étant représentative usuellement d'une autorisation d'émettre, tandis que la valeur « 0 » est représentative d'une interdiction d'émettre.

La suite des r(k) affectée à une station est nommée ici clé. Les valeurs r(k) peuvent être tirées à chaque tour k de sélection. En variante, la clé constituée de la suite des valeurs r(k) peut être déterminée en début de tournoi. Ainsi, ci-dessous, lorsqu'on fait référence à l'obtention d'une valeur r(k), il peut s'agir d'une obtention par tirage ou bien par calcul selon une méthode connue, par exemple une des méthodes connues citées plus haut.

Le procédé est décrit pour une station 10, toutes les autres stations 10', 10" mettant en oeuvre ce même procédé.

Au cours d'une étape F10, la station 10 initialise une variable k à la valeur 1, cette variable représentant l'indice du tour de sélection courant.

Cette étape F10 d'initialisation est suivie par une étape F20 d'obtention d'une valeur r(k) d'une variable binaire r, associée à la station 10 pour le tour de sélection courant d'indice k.

Cette étape F20 d'obtention d'une valeur de variable est suivie par une étape F30 au cours de laquelle on vérifie si la valeur binaire r(k) obtenue est égale à « 0 ».

Si tel est le cas (cas d'une interdiction d'émettre), ce test F30 est suivi par une étape F40 au cours de laquelle la station 10 écoute le canal Ch1 pour déterminer si une autre station 10', 10" a émis un signal indiquant que cette autre station 10, 10" désire émettre une trame de données. Simultanément, la station 10 émet un signal d'occupation dans le canal Ch2.

A l'étape F50, si un signal a été détecté dans le canal Ch1 à l'étape F40 (résultat du test de l'étape F50 positif), le procédé se termine par l'étape F60, sans que la station 10 ait émis son paquet de données.

Au cours de cette étape F60, la station 10 attend la fin des tours de sélection, et écoute les signaux émis par les autres stations dans le canal Ch1. Elle attend la fin du tournoi en mémorisant les informations représentatives émises pendant le tournoi.

En revanche, si à l'étape F40 aucun signal n'est détecté dans le canal Ch1 (résultat du test de l'étape F50 négatif), ce test est suivi par un test à l'étape F80 au cours duquel on détermine si le tour k est le dernier tour de sélection, ce qui revient à vérifier si la valeur k est égale à la valeur kₘₐₓ.

Si k est strictement inférieur à kₘₐₓ, le résultat du test de l'étape F80 est négatif. Cette étape est alors suivie par une étape F90 au cours de laquelle on incrémente la valeur de la variable k d'une unité, en vue de l'exécution du tour de sélection suivant.

Si au cours du test de l'étape F30, il est déterminé que la valeur binaire obtenue est égale à la valeur prédéterminée 1 (cas d'une autorisation d'émettre), ce test F30 est suivi par une étape F70 d'émission, dans le canal Ch1, d'un signal indiquant que la station 10 a obtenu une autorisation d'émettre et a l'intention d'émettre un paquet de données via le réseau. Simultanément, la station 10 émet un signal d'occupation dans le canal Ch2.

Cette étape F70 d'émission d'un signal est suivie par l'étape F80 déjà décrite au cours de laquelle on vérifie si le tour de sélection courant k est le dernier tour de sélection.

Si tel n'est pas le cas, ce test F80 est suivi par l'étape F90 d'incrémentation déjà décrite.

L'étape F90 d'incrémentation est suivie par une nouvelle exécution des étapes F20 à F80 déjà décrites, pour le tour de sélection suivant et selon la logique d'enchaînement des étapes qui vient d'être décrite.

Au contraire, si le test de l'étape F80 est positif (k= kmax), le tournoi s'achève et la station mémorise une information représentative du fait qu'elle a gagné le tournoi.

Après l'exécution du tournoi, à l'étape F100, la station 10 détermine, à partir de l'information mémorisée à l'étape F60 (la station a perdu le tournoi) ou F80 (la station a gagné le tournoi), si elle a gagné ou perdu le tournoi et, si elle a gagné le tournoi, la station 10 émet sa trame de données.

Le tournoi mis en oeuvre par les stations 10, 10' et 10" permet de sélectionner efficacement une station autorisée à émettre une trame de donnée. Par ailleurs, pendant le déroulement du tournoi, une station 11 peut également souhaiter émettre une trame de donnée. Comme expliqué en introduction, pour déterminer l'instant auquel émettre une trame de données, une station 11 tire un nombre au hasard. Ce nombre sert de compteur à rebours pour l'émission du paquet, ce compteur étant différé si la station constate que le canal est occupé. A cet effet, les stations 11 utilisent pour l'émission de trame, entre autres, le canal Ch2.

Ainsi, grâce à l'émission d'un signal d'occupation dans le canal Ch2 lors des étapes F40 et F70 précédemment décrites, les stations 11 sont informées que le réseau 1 est occupé. En particulier, si toutes les stations 10, 10', 10" qui participent au tournoi obtiennent, lors d'un tour k déterminé, la valeur r(k) = 0, aucun signal n'est émis dans le canal Ch1. Toutefois, dans le canal Ch2 écouté par les stations 11, un signal d'occupation est émis. Les stations 11 diffèrent donc leur compteur à rebours et n'émettent pas de trame pendant le déroulement du tournoi, ce qui permet d'éviter des collisions et d'améliorer l'efficacité du tournoi.

Dans le procédé représenté sur la figure 3, toutes les stations 10, 10', 10" qui participent au tournoi émettent, à chaque tour, un signal d'occupation dans le canal Ch2, soit à l'étape F40 soit à l'étape F70.

Dans une variante, seule une partie des stations 10, 10', 10" émet le signal d'occupation dans le canal Ch2. Il peut s'agir par exemple d'un sous-ensemble de stations prédéterminé qui peut changer à chaque tour k. Cela permet notamment d'éviter qu'un trop grand nombre d'émissions simultanées du signal d'occupation causent des interférences avec d'autres appareils de télécommunication sans fil. Dans ce cas, l'émission du signal d'occupation dans le canal Ch2 (à l'étape F40 ou F70) peut être précédée d'un test visant à déterminer si la station appartient au sous-ensemble qui doit émettre le signal d'occupation.

Dans une variante également, si les canaux Ch1 et Ch2 (ainsi que d'autres canaux éventuels) sont utilisés tout deux par la station 11 pour détecter l'occupation du canal d'émission, l'étape F70 ne comprend pas l'émission d'un signal d'occupation dans le canal Ch2. Dans ce cas, les stations 11 peuvent également détecter que le réseau 1 est occupé, soit parce qu'au moins une station a obtenue la valeur r(k) = 0 et émet dans le canal Ch2 à l'étape F40, soit parce qu'au moins une station a obtenue la valeur r(k) = 1 et émet dans le canal Ch1 à l'étape F70, cette émission étant détectable dans le canal Ch2.

La **Figure 4** est un organigramme qui représente les principales étapes d'un procédé de régulation d'émission selon un deuxième mode de réalisation de l'invention. Le deuxième mode de réalisation de l'invention peut être considéré comme une variante du premier mode de réalisation. Ainsi, dans la description qui suit, les mêmes notations et références sont utilisées et la description portera principalement sur les aspects spécifiques au deuxième mode de réalisation.

Dans le mode de réalisation de la figure 4, à l'étape F40 la station 10 écoute le canal Ch1 pour déterminer si une autre station 10', 10" a émis un signal indiquant que cette autre station 10, 10" désire émettre une trame de données. Simultanément, la station 10 écoute le canal Ch3 pour déterminer si une station 11 est en train d'émettre une trame. Le test de l'étape F50 est positif si un signal a été détecté dans le canal Ch1 ou dans le canal Ch3. Dans ce cas, le procédé se termine par l'étape F60, sans que la station 10 ait émis son paquet de données.

De manière similaire, à l'étape F70, la station 10 émet dans le canal Ch1 un signal indiquant que la station 10 a obtenu une autorisation d'émettre et a l'intention d'émettre un paquet de données via le réseau. Simultanément, la station 10 écoute le canal Ch3 pour déterminer si une station 11 est en train d'émettre une trame.

L'étape F70 est suivie par une étape de test F75 au cours duquel la station 10 détermine si elle a détecté une émission dans le canal Ch3. Si un signal a été détecté dans le canal Ch3, le résultat du test de l'étape F75 est positif et le procédé se termine par l'étape F60, sans que la station 10 ait émis son paquet de données.

Par contre, si aucun signal n'a été détecté dans le canal Ch3, le résultat du test de l'étape F75 est négatif et le procédé se poursuit à l'étape F80.

Le deuxième mode de réalisation permet donc d'utiliser un canal Ch1 pour la mise en oeuvre du tournoi, et d'écouter simultanément un autre canal Ch3 dans lequel des stations 11 sont susceptibles d'émettre des trames. Si une trame émise par une station 11 est détectée, le tournoi est interrompu sans qu'aucune station 10, 10', 10" n'ai émise de trame de données et sans poursuivre l'émission de signaux dans le canal Ch1 par les stations ayant obtenue une valeur représentative d'une autorisation d'émettre. Cela permet d'éviter une collision entre la trame émise par la station 11 et la trame qui aurait été émise par la station 10 gagnante du tournoi.

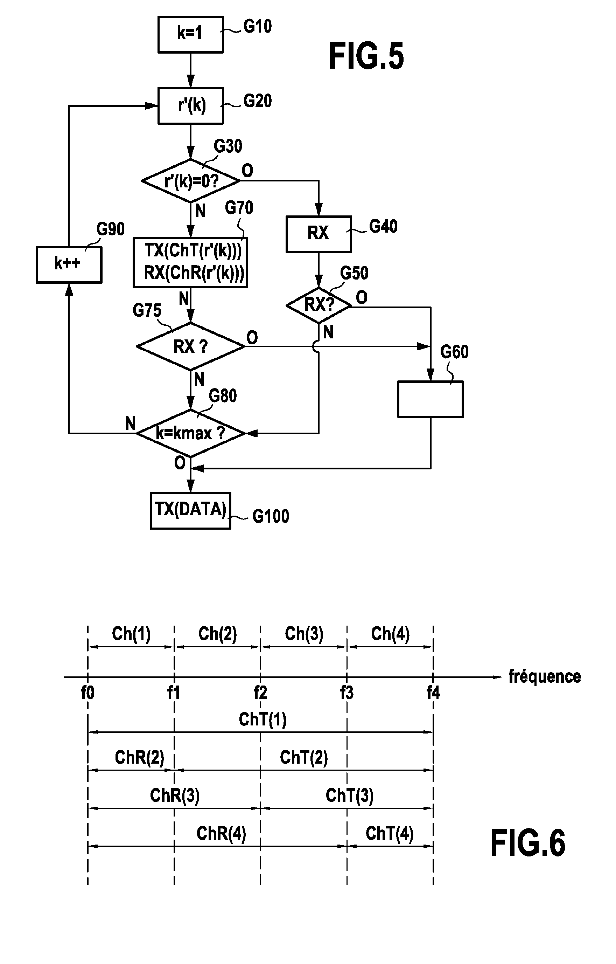

La **Figure 5** est un organigramme qui représente les principales étapes d'un procédé de régulation d'émission selon un troisième mode de réalisation de l'invention. Dans ce troisième mode de réalisation, le canal Ch1 servant à la mise en oeuvre du tournoi est divisé en sous-canaux afin de permettre un départage plus rapide entre stations participant à ce tournoi.

Dans la suite de la description du troisième mode de réalisation, les notations suivantes seront utilisées :
- m représente le nombre de canaux de communication Ch(i) différents, utilisés par les stations 10, 10', 10" pour la mise en oeuvre du tournoi ;
- Ch(i) représente un canal de communication n° i, avec i compris entre 1 et m, parmi les m canaux de communication utilisés par les stations 10, 10', 10" pour la mise en oeuvre du tournoi ; chacun des canaux Ch(i) est un sous-canal du canal Ch1 réservé à la mise en oeuvre du tournoi, les sous-canaux Ch(i) étant disjoints les uns des autres;
- ChT(i) représente un canal de communication pour l'émission de signaux pendant le tournoi; ce canal de communication est défini à partir des sous-canaux Ch(i);
- ChR(i) représente un canal de communication pour l'écoute de signaux pendant le tournoi; ce canal de communication est défini à partir des canaux ChT(i) ou des sous-canaux Ch(i);
- k est l'indice identifiant le tour de sélection au cours d'un tournoi ;
- kₘₐₓ est le nombre maximal de tours de sélection pour un tournoi ;
- r' est une variable pouvant prendre une valeur entière comprise entre 0 et m ;
- r'(k) est la valeur de la variable r' obtenue pour le tour de sélection d'indice k ; r'(k) appartient à l'ensemble {0,..., m}, les valeurs 1 à m étant représentatives d'une autorisation d'émettre, tandis que la valeur « 0 » est représentative d'une interdiction d'émettre. Les valeurs 1 à m sont représentatives respectivement de niveaux de priorités décroissants utilisés pour le départage des stations lors du tournoi, m étant le niveau de priorité le plus bas qui puisse être affecté à une station au cours d'un tour de sélection. On affecte ainsi à chacun des canaux ChT(i), pour i = 1 à m, un niveau de priorité i.

Dans le cas de canaux radio, ces canaux ChT(i) doivent être composés de telle sorte que, pour 1 <=i< = m, le canal ChT(i), de niveau de priorité supérieur au canal ChT(j), avec 1<=i<j<=m, comporte au moins une fréquence (ou partie de canal) non présente dans le canal ChT(j), de façon à ce qu'une station émettrice sur le canal ChT(j) puisse détecter une émission par une station émettrice sur le canal ChT(i). En pratique, la détection sera possible sur cette fréquence (partie de canal), puisque non couverte par le canal ChT(i). En résumé, lorsque i<j, un émetteur de signal sur ChT(j) doit pouvoir détecter une émission par une autre station d'un signal sur le canal ChT(i).

La composition des canaux ChR(i) découle alors du choix des canaux ChT(i): un canal ChR(i) est composé d'au moins une fréquence (ou partie de canal) ou de chaque fréquence (partie de canal):
- faisant partie d'un canal ChT(j1) affecté à un niveau de priorité j1 plus élevé que le niveau de priorité représenté par la valeur i (c'est-à-dire j1<i),
- mais ne faisant partie d'aucun canal ChT(j2) affecté à un niveau de priorité j2 égal ou inférieur au niveau de priorité représenté par la valeur i (c'est-à-dire j2>=i).

Si la valeur de i est supérieure ou égale à 3, la constitution d'un canal ChR(i) doit permettre de détecter plusieurs canaux ChT(j1) de niveau de priorité plus élevé (j1=1, j2=2, etc). En pratique, au moins une fréquence (partie de canal) de chaque canal ChT(j1) de niveau de priorité plus élevé, ne faisant partie d'aucun canal ChT(j2) de niveau de priorité égal ou inférieur, fera partie du canal ChR(i).

Dans un premier exemple de réalisation, pour 1 <=i< = m, le canal ChT(i) est identique au sous-canal Ch(i) et le canal ChR(i) est la réunion des canaux Ch(j) tels que j<i.

Dans un deuxième exemple de réalisation, pour 1 <=i< = m, le canal ChT(i) est égal à la réunion des canaux Ch(j) pour i<=j< = m et le canal ChR(i) est égal à la réunion des canaux Ch(j) tels que j<i. La figure 6 illustre ce deuxième exemple dans le cas où les sous-canaux Ch(i) sont constitués chacun d'une sous-bande continue de fréquences.

La suite des r'(k) affectée à une station est nommée ici clé. Les valeurs r'(k) peuvent être tirées à chaque tour k de sélection. En variante, la clé constituée de la suite des valeurs r'(k) peut être déterminée en début de tournoi. Ainsi, ci-dessous, lorsqu'on fait référence à l'obtention d'une valeur r'(k), il peut s'agir d'une obtention par tirage ou par bien par calcul, selon par exemple une des méthodes connues citées plus haut.

Le procédé est décrit pour une station 10, toutes les autres stations 10', 10" mettant en oeuvre ce même procédé.

Au cours d'une étape G10, la station 10 initialise une variable k à la valeur 1, cette variable représentant l'indice du tour de sélection courant.

Cette étape G10 d'initialisation est suivie par une étape G20 d'obtention d'une valeur r'(k) d'un niveau de priorité r', associée à la station 10 pour le tour de sélection courant d'indice k.

Cette étape G20 d'obtention d'une valeur de niveau de priorité est suivie par une étape G30 au cours de laquelle on vérifie si la valeur r'(k) obtenue est égale à la valeur « 0 » représentative d'une interdiction d'émettre.

Si tel est le cas (cas d'une interdiction d'émettre), ce test G30 est suivi par une étape G40 au cours de laquelle la station 10 écoute les m canaux de communication Ch(i), pour i = 1 à m, pour déterminer si une autre station 10', 10" a émis un signal indiquant que cette autre station 10, 10" désire émettre une trame de données.

A l'étape G50, si un signal a été détecté dans un des canaux Ch(i) à l'étape G40 (résultat du test de l'étape G50 positif), le procédé se termine par l'étape G60, sans que la station 10 ait émis son paquet de données.

Au cours de cette étape G60, la station 10 attend la fin des tours de sélection, et écoute les signaux émis par les autres stations dans les canaux Ch(i). Elle attend la fin du tournoi en mémorisant les informations représentatives émises pendant le tournoi.

En revanche, si à l'étape G40 aucun signal n'est détecté dans les canaux Ch(i) (résultat du test de l'étape G50 négatif), ce test est suivi par un test à l'étape G80 au cours duquel on détermine si le tour k est le dernier tour de sélection, ce qui revient à vérifier si la valeur k est égale à la valeur kₘₐₓ.

Si k est strictement inférieur à kₘₐₓ, le résultat du test de l'étape G80 est négatif. Cette étape est alors suivie par une étape G90 au cours de laquelle on incrémente la valeur de la variable k d'une unité, en vue de l'exécution du tour de sélection suivant.

Si au cours du test de l'étape G30, il est déterminé que la valeur r'(k) obtenue est différente de 0, (cas d'une autorisation d'émettre), ce test G30 est suivi par une étape G70 d'émission, dans un canal de communication ChT(r'(k)), d'un signal indiquant que la station 10 a obtenu une autorisation d'émettre et a l'intention d'émettre un paquet de données via le réseau. Autrement dit, dans le troisième mode de réalisation, le canal de communication dans lequel est émis le signal indiquant que la station 10 a obtenu une autorisation d'émettre est déterminé en fonction de la valeur r'(k) obtenue, représentative d'une autorisation d'émettre.

Simultanément, toujours à l'étape G70, sauf si la valeur obtenue r'(k) est égale à 1, la station 10 écoute le canal de communication ChR(r'(k)), comprenant au moins une fréquence (ou partie de canal) faisant partie d'un canal de communication ChT(j1) associé à un niveau de priorité plus élevé que le niveau de priorité r'(k) (c'est-à-dire j1<r'(k)), mais ne faisant partie d'aucun canal de communication ChT(j2) associé à un niveau de priorité égal ou inférieur au niveau de priorité r'(k) (c'est-à-dire j2>=r'(k)).

Cette étape G70 d'émission d'un signal dans un canal et d'écoute d'au moins un autre canal est suivie par l'étape G75. A l'étape G75, si un signal a été détecté dans un des canaux ChR(r'(k)) à l'étape G70 (résultat du test de l'étape G75 positif), le procédé se termine par l'étape G60 déjà décrite, sans que la station 10 ait émis son paquet de données.

En revanche, si à l'étape G70 aucun signal n'est détecté dans les canaux ChR(r'(k)) (résultat du test de l'étape G750 négatif), ce test est suivi par un test à l'étape G80 déjà décrite au cours de laquelle on vérifie si le tour de sélection courant k est le dernier tour de sélection.

Si tel n'est pas le cas, ce test G80 est suivi par l'étape G90 d'incrémentation déjà décrite.

L'étape G90 d'incrémentation est suivie par une nouvelle exécution des étapes G20 à G80 déjà décrites, pour le tour de sélection suivant et selon la logique d'enchaînement des étapes qui vient d'être décrite.

Au contraire, si le test de l'étape G80 est positif (k= kmax), le tournoi s'achève et la station mémorise une information représentative du fait qu'elle a gagné le tournoi.

Après l'exécution du tournoi, à l'étape G100, la station 10 détermine, à partir de l'information mémorisée à l'étape G60 (la station a perdu le tournoi) ou G80 (la station a gagné le tournoi), si elle a gagné ou perdu le tournoi et, si elle a gagné le tournoi, la station 10 envoie une trame de données.

Le tournoi mis en oeuvre par les stations 10, 10' et 10", permet de sélectionner efficacement une station autorisée à émettre une trame de donnée, avec un nombre de tours de sélection kₘₐₓ réduit. En effet, à chaque tour, il est possible de différencier entre m + 1 classes de station au lieu de 2 dans les tournois de l'art antérieur. Les stations dont la valeur r'(k) est différente de 0 et la moins élevée peuvent poursuivre le tournoi, les autres stations étant éliminées. Dans ce cas, la probabilité d'une issue négative au tournoi, c'est-à-dire d'une émission avec collision lorsqu'au moins deux stations considèrent qu'elles ont gagné le tournoi, diminue asymptotiquement en 1 / (m + 1)^{kmax}. Le nombre de tours kmax, et donc la durée du tournoi, peut donc être réduit tout en conservant une probabilité d'issue négative déterminée.

Si m est suffisamment élevé, on peut même envisager un tournoi en un seul tour (kₘₐₓ = 1). Dans ce cas, les étapes G10, G80 et G90 ne sont pas nécessaires.

A titre d'exemple, pour m = 43, le procédé de la figure 4 permet de distinguer entre 44 classes de station en un seul tour, alors qu'un tournoi de l'art antérieur nécessiterait 6 tours.

On a décrit un exemple dans lequel, à l'étape G70, une station 10 émet dans un canal de communication déterminé en fonction de la valeur r'(k) qu'elle a obtenue, et écoute les canaux de communication d'indices inférieurs. En variante, toute autre schéma d'émission et d'écoute en fonction de la valeur r'(k) obtenue, permettant de distinguer les stations, peut être envisagé. Par exemple, une station 10 peut émettre dans le canal de communication d'indice r'(k) et les canaux d'indices supérieurs, et simultanément écouter les canaux de communication d'indices inférieurs.

Les différents modes de réalisation décrits précédemment peuvent être combinés.

Par exemple, dans un mode de réalisation correspondant à une combinaison du premier mode de réalisation (Figure 3) et du troisième mode de réalisation (Figure 5), les stations 10, 10', 10" utilisent un ensemble de canaux, constitué de sous-canaux Ch(i) du canal Ch1, pour i = 1 à m, pour la mise en oeuvre du tournoi, et émettent un signal d'occupation à destination des stations 11 dans un autre canal Ch2.

De manière similaire, dans un mode de réalisation correspondant à une combinaison du deuxième mode de réalisation (Figure 4) et du troisième mode de réalisation (Figure 5), les stations 10, 10', 10" utilisent un ensemble de canaux, constitué de sous-canaux Ch(i) du canal Ch1, pour i = 1 à m, pour la mise en oeuvre du tournoi, et écoutent l'éventuelle émission d'une trame par une stations 11 dans un autre canal Ch3.

Dans un mode de réalisation correspondant à une combinaison du premier mode de réalisation (Figure 3), du deuxième mode de réalisation (Figure 4), et du troisième mode de réalisation (Figure 5), les stations 10, 10', 10" utilisent un canal Ch1 pour la mise en oeuvre du tournoi, émettent un signal d'occupation à destination des stations 11 dans un autre canal Ch2, et écoutent l'éventuelle émission d'une trame par une station 11 dans un autre canal Ch3. Un tel mode de réalisation présente un intérêt car une station 11 qui commence à émettre une trame peut émettre sa trame en utilisant en partie le canal Ch3 avant d'avoir détecté le signal d'occupation envoyé dans le canal Ch2. Dans ce cas, les stations 10, 10', 10" détecte la présence d'une émission dans le canal Ch3, ce qui a pour effet d'interrompre le déroulement du tournoi. Aucune station 10, 10', 10" n'ayant gagné le tournoi, elles n'émettent pas de trame qui aurait provoqué une collision avec la trame envoyée par la station 11. Ceci est particulièrement intéressant dans le cas où le tournoi s'effectue pendant après un intervalle PIFS (tel que défini dans la famille de normes IEEE 802.11) car à ce même instant des points d'accès peuvent émettre des trames de gestion.

L'invention est applicable aux réseaux WLAN et plus généralement aux réseaux CSMA/CA dans lesquels des stations peuvent communiquer en utilisant différents canaux de communication, correspondant par exemple à différentes bandes de fréquences. Elle est particulièrement intéressante à utiliser dans un réseau dans lequel des stations conformes à l'invention cohabitent avec des stations utilisant un procédé de régulation d'émission de l'art antérieur, par exemple basé sur un mécanisme de fenêtre de congestion.

L'invention est également applicable à des systèmes d'émission de signaux optiques, ou plus généralement électromagnétiques, pour lesquels on dispose de plusieurs canaux de communication, définis par exemple par les fréquences d'émission qui les composent.

L'invention est également applicable à des réseaux filaires supportant l'émission de signaux via différents canaux de communication, définis par exemple par les fréquences d'émission qui les composent.

## Revendications

1. Procédé de régulation d'émission pouvant être mis en oeuvre par une station (10) ayant au moins une trame de données à émettre via un réseau (1) de télécommunication, le procédé comportant, lors d'au moins un tour (k) de sélection parmi un ensemble de tours de sélection:
- une étape (F20, G20) d'obtention d'une valeur (r(k), r'(k)) représentative soit d'une autorisation d'émettre soit d'une interdiction d'émettre ladite trame ;
- lorsque ladite valeur est représentative d'une autorisation d'émettre, une étape (F70, G70) d'émission d'un signal d'information dans un premier canal de communication (Ch1, ChT(r'(k))) dudit réseau, pour indiquer aux autres stations (10', 10") que ladite station (10) a obtenu une valeur représentative d'une autorisation d'émettre ; ou,
- lorsque ladite valeur est représentative d'une interdiction d'émettre, une étape (F40, G40) d'écoute d'un éventuel signal d'information émis dans le premier canal de communication (Ch1, ChR(r'(k))) dudit réseau (1) ;
ledit procédé de régulation étant **caractérisé en ce qu'**il comprend en outre :
- une étape (F40, F70, G40, G70) d'écoute ou d'émission dans un deuxième canal de communication (Ch2, Ch3, ChR(r'(k))) dudit réseau (1), différent du premier canal de communication, cette étape d'écoute ou d'émission dans le deuxième canal de communication étant exécutée simultanément à l'étape d'émission dans le premier canal de communication ou à l'étape d'écoute dans le premier canal de communication.

2. Procédé de régulation d'émission selon la revendication 1, dans lequel ledit premier canal de communication et ledit deuxième canal de communication correspondent à deux ensembles d'au moins une fréquence différents.

3. Procédé de régulation d'émission selon la revendication 2, dans lequel l'étape (F40, F70) d'écoute ou d'émission dans le deuxième canal de communication comprend (Ch2), simultanément à l'émission ou à l'écoute du signal d'information dans le premier canal de communication (Ch1), l'émission d'un signal d'occupation dans le deuxième canal (Ch2).

4. Procédé de régulation d'émission selon la revendication 3, dans lequel l'émission du signal d'occupation dans le deuxième canal (Ch2) est précédée d'un test visant à déterminer si la station appartient à un sous-ensemble de stations qui doivent émettre le signal d'occupation.

5. Procédé de régulation d'émission selon la revendication 2, dans lequel l'étape (F40, F70) d'écoute ou d'émission dans le deuxième canal de communication (Ch3) comprend, simultanément à l'émission ou à l'écoute du signal d'information dans le premier canal de communication (Ch1), l'écoute dans le deuxième canal (Ch3) d'une éventuelle trame de données émise par une station (11) ne participant pas au tournoi, et lorsqu'une trame est détectée dans le deuxième canal (Ch3), une étape (F60) de détermination que la station (10) qui participe au tournoi n'est pas autorisée à émettre de trame de données.

6. Procédé de régulation d'émission selon la revendication 2, dans lequel une pluralité de valeurs (r'(k)) sont représentatives d'une autorisation d'émettre,
le premier canal de communication (ChT(r'(k))) étant choisi dans un ensemble de canaux de communication (ChT(i)) en fonction de la valeur (r'(k)) représentative d'une autorisation d'émettre obtenue,
le deuxième canal de communication (ChR(r'(k))) étant composé d'au moins une fréquence ne faisant partie du canal choisi,
l'étape (G70) d'écoute ou d'émission dans le deuxième canal de communication (ChR(r'(k))) comprenant, simultanément à l'émission du signal d'information dans le premier canal de communication, l'écoute d'un signal d'information dans le deuxième canal de communication (ChR(r'(k))).

7. Procédé de régulation d'émission selon la revendication 6, dans lequel un niveau de priorité est affecté à chacun des canaux dudit ensemble de canaux et chacune des valeurs (r'(k)) représentatives d'une autorisation d'émettre est représentative d'un dit niveau de priorité,
le premier canal de communication (ChT(r'(k)) étant le canal auquel est affecté le niveau de priorité représenté par la valeur (r'(k)) obtenue,
le deuxième canal de communication (ChR(r'(k))) étant composé d'au moins une fréquence, faisant partie d'un canal dudit ensemble auquel est affecté un niveau de priorité plus élevé que le niveau de priorité représenté par la valeur (r'(k)) obtenue, mais qui ne fait pas partie d'un canal dudit ensemble auquel est affecté un niveau de priorité égal ou inférieur au niveau de priorité représenté par la valeur (r'(k)) obtenue.

8. Dispositif de régulation d'émission destiné à une station (10) ayant au moins une trame de données à émettre via un réseau (1) de télécommunication, le dispositif comportant :
- des moyens d'obtention, lors d'au moins un tour (k) de sélection parmi un ensemble de tours de sélection, d'une valeur (r(k), r'(k)) représentative soit d'une autorisation d'émettre soit d'une interdiction d'émettre ladite trame ;
- des moyens d'émission d'un signal d'information dans un premier canal de communication (Ch1, ChT(r'(k))) dudit réseau, pour indiquer aux autres stations (10', 10") que ladite station (10) a obtenu une valeur représentative d'une autorisation d'émettre, activés lorsque ladite valeur est représentative d'une autorisation d'émettre ; et,
- des moyens d'écoute d'un éventuel signal d'information émis dans le premier canal de communication (Ch1, ChT(r'(k))) dudit réseau (1), activés lorsque ladite valeur est représentative d'une interdiction d'émettre ;
ledit dispositif de régulation étant **caractérisé en ce qu'**il comprend en outre :
- des moyens d'écoute ou d'émission dans un deuxième canal de communication (Ch2, ChR(r'(k))) dudit réseau (1), différent du premier canal de communication, ces moyens d'écoute ou d'émission dans le deuxième canal de communication étant activés simultanément aux moyens d'émission dans le premier canal de communication ou aux moyens d'écoute dans le premier canal de communication.

9. Dispositif de régulation d'émission selon la revendication 8, dans lequel les moyens d'écoute ou d'émission dans le deuxième canal de communication (Ch2) sont configurés pour émettre un signal d'occupation dans le deuxième canal (Ch2) simultanément à l'émission ou à l'écoute du signal d'information dans le premier canal de communication (Ch1).

10. Dispositif de régulation d'émission selon la revendication 8, dans lequel les moyens d'écoute ou d'émission dans le deuxième canal de communication (Ch3) sont aptes à écouter dans le deuxième canal (Ch3) une éventuelle trame de données émise par une station (11) ne participant pas au tournoi, simultanément à l'émission ou à l'écoute du signal d'information dans le premier canal de communication (Ch1), le dispositif de régulation comprenant des moyens de détermination que la station (10) qui participe au tournoi n'est pas autorisée à émettre de trame de données, activés lorsqu'une trame est détectée dans le deuxième canal (Ch3).

11. Dispositif de régulation d'émission selon la revendication 8, dans lequel une pluralité de valeurs (r'(k)) sont représentatives d'une autorisation d'émettre,
le premier canal de communication (ChT(r'(k)) étant choisi dans un ensemble de canaux de communication (ChT(i)) en fonction de la valeur (r'(k)) représentative d'une autorisation d'émettre obtenue,
le deuxième canal de communication (ChR(r'(k))) étant composé d'au moins une fréquence ne faisant pas partie canal choisi,
les moyens d'écoute ou d'émission dans le deuxième canal de communication (ChR(r'(k))) étant aptes à écouter un signal d'information dans le deuxième canal de communication (ChR(r'(k))) simultanément à l'émission du signal d'information dans le premier canal de communication.

12. Programme informatique comportant des instructions logicielles pour la mise en oeuvre d'un procédé de régulation d'émission selon l'une quelconque des revendications 1 à 7, lorsque ledit programme est exécuté par un processeur de données.

13. Support d'enregistrement lisible par un processeur de données sur lequel est enregistré un programme informatique selon la revendication 12.

## Patentansprüche

1. Verfahren zur Steuerung eines Rundfunks, das von einer Station (10) eingesetzt werden kann, die mindestens einen über ein Telekommunikationsnetz (1) zu sendenden Datenraster hat, wobei das Verfahren bei mindestens einer Auswahlrunde (k) unter einer Gesamtheit von Auswahlrunden umfasst:
- einen Schritt (F20, G20) des Erhalts eines Werts (r(k), r'(k)), der entweder für eine Sendegenehmigung oder ein Sendeverbot des Rasters repräsentativ ist;
- wenn der Wert für eine Sendegenehmigung repräsentativ ist, einen Schritt (F70, G70) des Sendens eines Informationssignals in einem ersten Kommunikationskanal (Ch1, ChT(r'(k))) des Netzes, um den anderen Stationen (10', 10") anzuzeigen, dass die Station (10) einen für eine Sendegenehmigung repräsentativen Wert erhalten hat; oder
- wenn der Wert für ein Sendeverbot repräsentativ ist, einen Schritt (F40, G40) des Abhörens eines möglichen Informationssignals, das in dem ersten Kommunikationskanal (Ch1, ChR(r'(k))) des Netzes (1) gesandt wird;
wobei das Steuerungsverfahren **dadurch gekennzeichnet ist, dass** es ferner umfasst:
- einen Schritt (F40, F70, G40, G70) des Abhörens oder Sendens in einem zweiten Kommunikationskanal (Ch2, Ch3, ChR(r'(k))) des Netzes (1), der sich vom ersten Kommunikationskanal unterscheidet, wobei dieser Schritt des Abhörens oder Sendens in dem zweiten Kommunikationskanal gleichzeitig mit dem Schritt des Sendens in dem ersten Kommunikationskanal oder mit dem Schritt des Abhörens in dem ersten Kommunikationskanal erfolgt.

2. Verfahren zur Steuerung eines Rundfunks nach Anspruch 1, bei dem der erste Kommunikationskanal und der zweite Kommunikationskanal zwei verschiedenen Einheiten mindestens einer Frequenz entsprechen.

3. Verfahren zur Steuerung eines Rundfunks nach Anspruch 2, bei dem der Schritt (F40, F70) des Abhörens oder Sendens in dem zweiten Kommunikationskanal (Ch2) gleichzeitig mit dem Senden oder Abhören des Informationssignals in dem ersten Kommunikationskanal (Ch1) das Senden eines Belegungssignals in dem zweiten Kanal (Ch2) umfasst.

4. Verfahren zur Steuerung eines Rundfunks nach Anspruch 3, bei dem vor dem Senden des Belegungssignals in dem zweiten Kanal (Ch2) ein Test erfolgt, der bestimmen soll, ob die Station einer Untereinheit von Stationen angehört, die das Belegungssignal senden sollen.

5. Verfahren zur Steuerung eines Rundfunks nach Anspruch 2, bei dem der Schritt (F40, F70) des Abhörens oder Sendens in dem zweiten Kommunikationskanal (Ch3) gleichzeitig mit dem Senden oder Abhören des Informationssignals in dem ersten Kommunikationskanal (Ch1) im zweiten Kanal (Ch3) das Abhören eines möglichen Datenrasters, der von einer Station (11), die nicht am Bewerb teilnimmt, entsandt wird, und wenn ein Raster in dem zweiten Kanal (Ch3) erfasst wird, einen Schritt (F60) der Bestimmung, ob die Station (10), die am Bewerb teilnimmt, nicht autorisiert ist, einen Datenraster zu senden, umfasst.

6. Verfahren zur Steuerung eines Rundfunks nach Anspruch 2, bei dem eine Vielzahl von Werten (r'(k)) für eine Sendegenehmigung repräsentativ ist,
wobei der erste Kommunikationskanal (ChT(r'(k))) aus einer Gesamtheit von Kommunikationskanälen (ChT(i)) in Abhängigkeit von dem Wert (r'(k)), der für eine erhaltene Sendegenehmigung repräsentativ ist, ausgewählt wird,
wobei der zweite Kommunikationskanal (ChR(r'(k))) aus mindestens einer Frequenz zusammengesetzt ist, die nicht Teil des ausgewählten Kanals ist,
wobei der Schritt (G70) des Abhörens oder Sendens in dem zweiten Kommunikationskanal (ChR(r'(k))) gleichzeitig mit dem Senden des Informationssignals in dem ersten Kommunikationskanal das Abhören eines Informationssignals in dem zweiten Kommunikationskanal (ChR(r'(k))) umfasst.

7. Verfahren zur Steuerung eines Rundfunks nach Anspruch 6, bei dem ein Prioritätsniveau jedem der Kanäle der Gesamtheit von Kanälen zugewiesen wird, und jeder der für eine Sendegenehmigung repräsentativen Werte (r'(k)) für ein Prioritätsniveau repräsentativ ist,
wobei der erste Kommunikationskanal (ChT(r'(k))) der Kanal ist, dem das Prioritätsniveau zugewiesen ist, das durch den erhaltenen Wert (r'(k)) repräsentiert wird,
wobei der zweite Kommunikationskanal (ChR(r'(k))) aus mindestens einer Frequenz zusammengesetzt ist, die Teil eines Kanals der Einheit ist, dem ein höheres Prioritätsniveau als das durch den erhaltenen Wert (r'(k)) repräsentierte Prioritätsniveau zugewiesen ist, die aber nicht Teil eines Kanals der Einheit ist, dem ein Prioritätsniveau gleich oder geringer als das durch den erhaltenen Wert (r'(k)) repräsentierte Prioritätsniveau zugewiesen ist.

8. Vorrichtung zur Steuerung eines Rundfunks, der für eine Station (10) bestimmt ist, die mindestens einen über ein Telekommunikationsnetz (1) zu sendenden Datenraster hat, wobei die Vorrichtung umfasst:
- Mittel für den Erhalt, bei mindestens einer Auswahlrunde (k) unter einer Gesamtheit von Auswahlrunden, eines Werts (r(k), r'(k)), der entweder für eine Sendegenehmigung oder ein Sendeverbot des Rasters repräsentativ ist;
- Mittel zum Senden eines Informationssignals in einem ersten Kommunikationskanal (Ch1, ChT(r'(k))) des Netzes, um den anderen Stationen (10', 10") anzuzeigen, dass die Station (10) einen für eine Sendegenehmigung repräsentativen Wert erhalten hat, die aktiviert werden, wenn der Wert für eine Sendegenehmigung repräsentativ ist; und
- Mittel zum Abhören eines möglichen Informationssignals, das in dem ersten Kommunikationskanal (Ch1, ChT(r'(k))) des Netzes (1) gesandt wird, die aktiviert werden, wenn der Wert für ein Sendeverbot repräsentativ ist;
wobei die Steuerungsvorrichtung **dadurch gekennzeichnet ist, dass** sie ferner umfasst:
- Mittel zum Abhören oder Senden in einem zweiten Kommunikationskanal (Ch2, ChR(r'(k))) des Netzes (1), der sich vom ersten Kommunikationskanal unterscheidet, wobei diese Mittel zum Abhören oder Senden in dem zweiten Kommunikationskanal gleichzeitig mit den Mitteln zum Senden in dem ersten Kommunikationskanal oder mit den Mitteln zum Abhören in dem ersten Kommunikationskanal aktiviert werden.

9. Vorrichtung zur Steuerung eines Rundfunks nach Anspruch 8, bei der die Mittel zum Abhören oder Senden in dem zweiten Kommunikationskanal (Ch2) derart ausgeführt sind, dass sie gleichzeitig mit dem Senden oder Abhören des Informationssignals in dem ersten Kommunikationskanal (Ch1) ein Belegungssignal in dem zweiten Kanal (Ch2) senden.

10. Vorrichtung zur Steuerung eines Rundfunks nach Anspruch 8, bei der die Mittel zum Abhören oder Senden in dem zweiten Kommunikationskanal (Ch3) geeignet sind, gleichzeitig mit dem Senden oder Abhören des Informationssignals in dem ersten Kommunikationskanal (Ch1) im zweiten Kanal (Ch3) einen möglichen Datenraster abzuhören, der von einer Station (11), die nicht am Bewerb teilnimmt, gesandt wird, wobei die Vorrichtung zur Steuerung Mittel zur Bestimmung, ob die Station (10), die am Bewerb teilnimmt, nicht autorisiert ist, einen Datenraster zu entsenden, umfasst, die aktiviert werden, wenn ein Raster in dem zweiten Kanal (Ch3) erfasst wird.

11. Vorrichtung zur Steuerung eines Rundfunks nach Anspruch 8, bei der eine Vielzahl von Werten (r'(k)) für eine Sendegenehmigung repräsentativ ist,
wobei der erste Kommunikationskanal (ChT(r'(k))) aus einer Gesamtheit von Kommunikationskanälen (ChT(i)) in Abhängigkeit von dem Wert (r'(k)), der für eine erhaltene Sendegenehmigung repräsentativ ist, ausgewählt wird,
wobei der zweite Kommunikationskanal (ChR(r'(k))) aus mindestens einer Frequenz zusammengesetzt ist, die nicht Teil des ausgewählten Kanals ist,
wobei die Mittel zum Abhören oder Senden in dem zweiten Kommunikationskanal (ChR(r'(k))) geeignet sind, gleichzeitig mit dem Senden des Informationssignals in dem ersten Kommunikationskanal ein Informationssignal in dem zweiten Kommunikationskanal (ChR(r'(k))) abzuhören.

12. Informatikprogramm, umfassend Softwarebefehle für den Einsatz eines Verfahrens zur Steuerung eines Rundfunks nach einem der Ansprüche 1 bis 7, wenn das Programm von einem Datenprozessor ausgeführt wird.

13. Von einem Datenprozessor lesbarer Aufzeichnungsträger, auf dem ein Informatikprogramm nach Anspruch 12 aufgezeichnet ist.

## Claims

1. Method of regulating sending that can be implemented by a station (10) having at least one data frame to be sent via a telecommunication network (1), the method comprising, during at least one selection round (k) from among a set of selection rounds:
- a step (F20, G20) of obtaining a value (r(k), r'(k)) representative either of an authorization to send or of a prohibition to send said frame;
- when said value is representative of an authorization to send, a step (F70, G70) of sending an information signal in a first communication channel (Ch1, ChT(r'(k))) of said network, to indicate to the other stations (10', 10") that said station (10) has obtained a value representative of an authorization to send; or,
- when said value is representative of a prohibition to send, a step (F40, G40) of listening to a possible information signal sent in the first communication channel (Ch1, ChR(r'(k))) of said network (1) ;
said method of regulating being **characterized in that** it furthermore comprises:
- a step (F40, F70, G40, G70) of listening or of sending in a second communication channel (Ch2, Ch3, ChR(r'(k))) of said network (1), different from the first communication channel, this step of listening or of sending in the second communication channel being executed simultaneously with the step of sending in the first communication channel or with the step of listening in the first communication channel.

2. Method of regulating sending according to Claim 1, in which said first communication channel and said second communication channel correspond to two different sets of at least one frequency.

3. Method of regulating sending according to Claim 2, in which the step (F40, F70) of listening or of sending in the second communication channel comprises (Ch2), simultaneously with the sending of or with the listening to the information signal in the first communication channel (Ch1), the sending of an occupancy signal in the second channel (Ch2).

4. Method of regulating sending according to Claim 3, in which the sending of the occupancy signal in the second channel (Ch2) is preceded by a test aimed at determining whether the station belongs to a subset of stations which have to send the occupancy signal.

5. Method of regulating sending according to Claim 2, in which the step (F40, F70) of listening or of sending in the second communication channel (Ch3) comprises, simultaneously with the sending of or with the listening to the information signal in the first communication channel (Ch1), listening in the second channel (Ch3) for a possible data frame sent by a station (11) not participating in the tournament, and when a frame is detected in the second channel (Ch3), a step (F60) of determining that the station (10) which participates in the tournament is not authorized to send any data frame.

6. Method of regulating sending according to Claim 2, in which a plurality of values (r'(k)) are representative of an authorization to send,
the first communication channel (ChT(r'(k))) being chosen in a set of communication channels (ChT(i)) as a function of the value (r'(k)) representative of an authorization to send obtained,
the second communication channel (ChR(r'(k))) being composed of at least one frequency not forming part of the chosen channel,
the step (G70) of listening or of sending in the second communication channel (ChR(r'(k))) comprising, simultaneously with the sending of the information signal in the first communication channel, the listening to an information signal in the second communication channel (ChR(r'(k))).

7. Method of regulating sending according to Claim 6, in which a priority level is assigned to each of the channels of said set of channels and each of the values (r'(k)) representative of an authorization to send is representative of a said priority level,
the first communication channel (ChT(r'(k)) being the channel to which the priority level represented by the value (r'(k)) obtained is assigned,
the second communication channel (ChR(r'(k))) being composed of at least one frequency, forming part of a channel of said set to which a priority level higher than the priority level represented by the value (r'(k)) obtained is assigned, but which does not form part of a channel of said set to which a priority level equal to or less than the priority level represented by the value (r'(k)) obtained is assigned.

8. Device for regulating sending intended for a station (10) having at least one data frame to be sent via a telecommunication network (1), the device comprising:
- means for obtaining, during at least one selection round (k) from among a set of selection rounds, a value (r(k), r'(k)) representative either of an authorization to send or of a prohibition to send said frame;
- means for sending an information signal in a first communication channel (Ch1, ChT(r'(k))) of said network, to indicate to the other stations (10', 10") that said station (10) has obtained a value representative of an authorization to send, said means being activated when said value is representative of an authorization to send; and,
- means for listening to a possible information signal sent in the first communication channel (Ch1, ChT(r'(k))) of said network (1), said means being activated when said value is representative of a prohibition to send;
said device for regulating being **characterized in that** it furthermore comprises:
- means for listening or sending in a second communication channel (Ch2, ChR(r'(k))) of said network (1), different from the first communication channel, these means for listening or for sending in the second communication channel being activated simultaneously with the means for sending in the first communication channel or with the means for listening in the first communication channel.

9. Device for regulating sending according to Claim 8, in which the means for listening or sending in the second communication channel (Ch2) are configured to send an occupancy signal in the second channel (Ch2) simultaneously with the sending of or with the listening to the information signal in the first communication channel (Ch1).

10. Device for regulating sending according to Claim 8, in which the means for listening or sending in the second communication channel (Ch3) are able to listen to in the second channel (Ch3) a possible data frame sent by a station (11) not participating in the tournament, simultaneously with the sending of or with the listening to the information signal in the first communication channel (Ch1), the regulating device comprising means for determining that the station (10) which participates in the tournament is not authorized to send any data frame, said means being activated when a frame is detected in the second channel (Ch3).

11. Device for regulating sending according to Claim 8, in which a plurality of values (r'(k)) are representative of an authorization to send,
the first communication channel (ChT(r'(k)) being chosen in a set of communication channels (ChT(i)) as a function of the value (r'(k)) representative of an authorization to send obtained,
the second communication channel (ChR(r'(k))) being composed of at least one frequency not forming part of the chosen channel,
the means for listening or sending in the second communication channel (ChR(r'(k))) being able to listen to an information signal in the second communication channel (ChR(r'(k))) simultaneously with the sending of the information signal in the first communication channel.

12. Computer program comprising software instructions for the implementation of a method of regulating sending according to any one of Claims 1 to 7, when said program is executed by a data processor.

13. Recording medium readable by a data processor on which is recorded a computer program according to Claim 12.
